# DEMANDE DE BREVET EUROPEEN

(11) **EP 3 985 490 A1**
(43) Date de publication de la demande: **20.04.2022**
(21) Numéro de dépôt: 20306208.8
(22) Date de dépôt: 14.10.2020
(51) Int. Cl.: G06F 3/042, G07F 9/00

(54) **BORNE DE COMMANDE INTERACTIVE SANS CONTACT**

(71) Demandeur: Aksor, 77400 Saint-Thibault des Vignes (FR)
(72) Inventeur: Tomasescu, Daniel, 77400 Saint-Thibault-des-Vignes (FR)
(74) Mandataire: August Debouzy

(57) **Abrégé**

L'invention concerne un dispositif électronique interactif comprenant un module d'affichage adapté pour afficher une interface graphique sur une surface d'affichage, un module de détection adapté pour déterminer une position d'un élément d'interaction de l'utilisateur dans un volume de détection prédéfini et un module de traitement adapté pour contrôler le dispositif électronique interactif en fonction de la position déterminée de l'élément d'interaction selon au moins un premier mode de fonctionnement. Dans le premier mode de fonctionnement, une surface projetée correspondant à la projection orthogonale du volume de détection prédéfini sur le plan comprenant la surface d'affichage est en décalage par rapport à ladite surface d'affichage de l'interface graphique.

## Description

### DOMAINE TECHNIQUE DE L'INVENTION

La présente invention concerne le domaine des dispositifs électroniques d'interaction homme-machine. La présente invention trouve des applications dans le domaine des bornes interactives pour la vente ou l'information du client. Elle trouve plus particulièrement des applications dans le domaine des bornes de commande interactives sans contact, utilisées par exemple dans les points de vente ou les restaurants.

### ARRIERE-PLAN TECHNIQUE

L'utilisation de bornes interactives de commande à écran tactile est connue pour augmenter le confort et l'expérience client tout en accélérant les flux de consommateurs lors des heures de grande affluence dans des commerces, particulièrement dans les commerces de restauration rapide. L'usage de bornes interactives permet également de proposer un parcours de commande élaboré et personnalisé ayant pour effet d'améliorer l'expérience et le panier moyen.

Toutefois, l'utilisation d'écrans tactiles pose au moins deux problèmes. Tout d'abord un problème d'hygiène, et ensuite un problème d'ergonomie.

L'utilisation d'un écran tactile pose un problème d'hygiène, chaque utilisateur de la borne interactive de commande venant toucher l'écran avec ses doigts, déposant possiblement sur l'écran des germes pouvant contaminer un autre utilisateur de la borne interactive de commande.

L'utilisation d'un écran tactile pose aussi un problème d'ergonomie. En effet, l'écran tactile d'une borne interactive de commande est généralement disposé en hauteur, le mettant hors de portée d'utilisateurs de petite taille, par exemple un enfant, ou d'un utilisateur en fauteuil roulant.

Il existe donc un besoin pour améliorer les dispositifs électroniques d'interaction homme-machine. La présente invention s'inscrit dans ce contexte.

### RESUME DE L'INVENTION

La présente invention a pour objet un dispositif électronique interactif comprenant :
- un module d'affichage adapté pour afficher une interface graphique sur une surface d'un écran ou de plusieurs écrans,
- un module de détection adapté pour déterminer une position d'un élément d'interaction d'un l'utilisateur dans un premier volume de détection prédéfini, et,
- un module de traitement adapté pour contrôler le dispositif électronique interactif en fonction de la position déterminée de l'élément d'interaction selon un premier mode de fonctionnement.

Dans le premier mode de fonctionnement, une première surface projetée correspondant à une projection orthogonale du premier volume de détection prédéfini sur un plan comprenant l'écran est en décalage par rapport à la surface de l'écran.

Avantageusement, un utilisateur du dispositif électronique interactif peut interagir avec l'interface graphique sans devoir toucher l'écran et au moyen d'un élément d'interaction, par exemple un doigt, qui peut être déplacé dans un volume décalé, par exemple vers le bas, par rapport à l'écran. Ainsi, il est possible d'interagir avec l'interface graphique quand bien même le haut de l'écran serait trop haut pour être accessible à un utilisateur.

Selon un mode de réalisation complémentaire, le premier volume de détection prédéfini est éloigné par rapport à l'écran selon un axe orthogonal depuis ledit écran.

Avantageusement, un utilisateur peut interagir avec le dispositif électronique interactif en étant éloigné du dispositif électronique interactif.

Selon un mode de réalisation complémentaire, le module de détection est adapté pour déterminer une position de l'élément d'interaction de l'utilisateur dans un deuxième volume de détection prédéfini, le module de traitement est adapté pour contrôler le dispositif électronique interactif en fonction de la position déterminée de l'élément d'interaction selon un deuxième mode de fonctionnement, et, dans le deuxième mode de fonctionnement, la surface projetée correspondant à la projection orthogonale du deuxième volume de détection prédéfini sur un plan comprenant la surface de l'écran.

Selon un mode de réalisation complémentaire, au moins une dimension, longueur ou largeur, de la première surface projetée est inférieure à la même dimension de la deuxième surface projetée.

Selon un mode de réalisation complémentaire, la première surface projetée correspond à une homothétie de la deuxième surface projetée.

Selon un mode de réalisation complémentaire, l'interface graphique comprend un curseur permettant d'interagir avec au moins un objet de l'interface graphique, le module de traitement étant adapté pour contrôler le curseur de l'interface graphique en fonction de la position de l'élément d'interaction déterminée par le module de détection.

Selon un mode de réalisation complémentaire, dans le premier mode de fonctionnement, le dispositif électronique interactif est adapté pour :
- enregistrer une première et une deuxième position déterminée de l'élément d'interaction,
- déterminer, en fonction de la première et de la deuxième position déterminée de l'élément d'interaction, un paramètre associé au mouvement de l'élément d'interaction entre la première et la deuxième position, et,
- si ce paramètre dépasse un seuil prédéfini, alors déclencher une action du curseur dans l'interface graphique.

Selon un mode de réalisation complémentaire, le dispositif électronique interactif est adapté pour :
- enregistrer périodiquement une position déterminée de l'élément d'interaction dans une file de type « fifo » comprenant « n » enregistrements, « n » étant plus grand ou égal à deux, le n-ième enregistrement de la file correspondant au dernier enregistrement dans la file d'une position déterminée,
- déterminer, après chaque enregistrement, en fonction du premier et du n-ième enregistrement de la position déterminée de l'élément d'interaction, un paramètre associé au mouvement de l'élément d'interaction entre la première et la n-ième position déterminée, et,
- si ce paramètre dépasse un seuil prédéfini, alors déclencher une action du curseur dans l'interface graphique.

Selon un mode de réalisation complémentaire, le dispositif électronique interactif comprend un module de basculement adapté pour provoquer un basculement entre le premier mode de fonctionnement et au moins le deuxième mode de fonctionnement.

Selon un mode de réalisation complémentaire, le module de basculement comprend un élément graphique, la première et la deuxième surface projetée comprennent l'élément graphique, et le module de traitement est adapté pour provoquer un basculement entre le premier mode de fonctionnement et au moins le deuxième mode de fonctionnement lorsque la projection de la position déterminée de l'élément d'interaction sur le plan comprenant l'écran est comprise, pendant une durée prédéterminée, dans l'élément graphique.

Selon un mode de réalisation complémentaire, lorsque le dispositif électronique interactif est installé pour une utilisation par des utilisateurs, lesdits utilisateurs étant situés devant le dispositif électronique interactif, la distance entre la face supérieure du volume de détection prédéfini et le sol devant le dispositif électronique interactif est inférieure à une distance prédéterminée.

L'invention concerne aussi une borne de commande interactive, la borne de commande interactive étant un dispositif électronique interactif selon la présente description.

L'invention concerne aussi un procédé de contrôle d'un dispositif électronique interactif, le dispositif électronique interactif comprenant un module d'affichage adapté pour afficher une interface graphique sur une surface d'un écran, le procédé comprenant les étapes de :
- déterminer, par un module de détection du dispositif électronique interactif, une position d'un élément d'interaction d'un utilisateur dans un premier volume de détection prédéfini,
- contrôler, par un module de traitement du dispositif électronique interactif, ledit dispositif électronique interactif en fonction de la position déterminée de l'élément d'interaction selon un premier mode de fonctionnement,
dans ce premier mode de fonctionnement, une première surface projetée correspondant à une projection orthogonale du premier volume de détection prédéfini sur un plan comprenant l'écran étant en décalage par rapport à la surface de l'écran.

### FIGURES

[Fig. 1] La figure 1 illustre un dispositif électronique interactif selon un mode de réalisation de l'invention, selon une vue en perspective (Fig. 1A) et une vue de côté (Fig. 1B).
[Fig. 2] La figure 2 illustre plus particulièrement un volume de détection du dispositif électronique interactif dans un mode de fonctionnement, selon une vue en perspective (Fig. 2A), une vue de profil (Fig. 2B) et une vue en coupe (Fig. 2C).
[Fig. 3] La figure 3 illustre plus particulièrement un volume de détection du dispositif électronique interactif dans un autre mode de fonctionnement, selon une vue en perspective (Fig. 3A) et une vue de profil (Fig. 3B).
[Fig. 4] La figure 4 illustre plus particulièrement un volume de détection du dispositif électronique interactif dans ledit autre mode de fonctionnement.
[Fig. 5] La figure 5 illustre schématiquement l'architecture matérielle d'un dispositif électronique interactif selon un mode de réalisation de l'invention.
[Fig. 6] La figure 6 illustre les étapes d'un procédé mis en œuvre par un dispositif électronique interactif selon un mode de réalisation de l'invention.

### DESCRIPTION DETAILLEE DE L'INVENTION

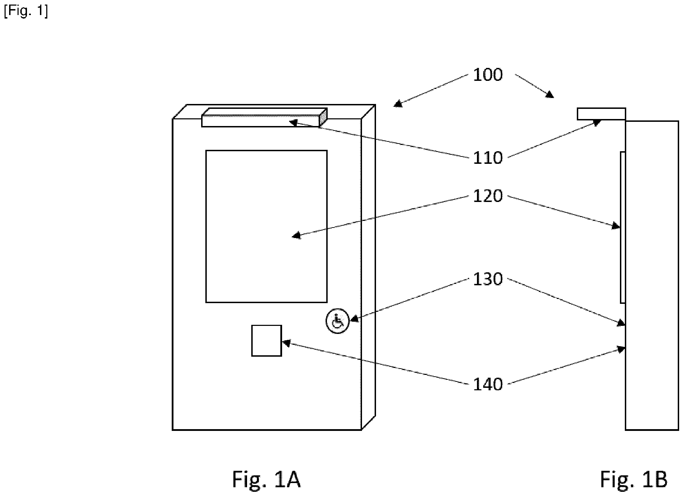

**La** **figure 1****,** plus particulièrement les figures 1A et 1B, illustre un dispositif électronique interactif 100. Le dispositif électronique interactif 100 est par exemple une borne interactive de commande, d'enregistrement ou d'information 100 adaptée pour permettre par exemple à un client de s'informer ou de passer lui-même une commande dans un point de vente comme un restaurant ou un cinéma. Une borne interactive de commande, d'enregistrement ou d'information désigne un dispositif autrement appelé par exemple « kiosque de commande », « borne d'enregistrement », « borne d'information » ou « borne libre-service ». Une borne interactive de commande, d'enregistrement ou d'information permet par exemple à un client d'un restaurant de parcourir un menu, faire son choix et payer sa commande. Une borne interactive de commande est généralement interconnectée à un système de gestion de commande permettant, une fois une commande saisie et éventuellement payée par un utilisateur de la borne interactive de commande, de gérer la préparation et/ou livraison de la commande.

Le dispositif électronique interactif ou borne interactive de commande 100 comprend :
- un module d'affichage adapté pour afficher une interface graphique sur une surface d'un ou plusieurs écrans 120,
- un module de détection 110 adapté pour déterminer une position d'un élément d'interaction d'un utilisateur dans un volume de détection prédéfini, et,
- un module de traitement (non représenté) adapté pour contrôler le dispositif électronique interactif 100 en fonction de la position déterminée de l'élément d'interaction selon au moins un mode de fonctionnement,

Le dispositif électronique interactif 100 peut comprendre de plus un ou plusieurs modules 140. Le module 140 peut être un terminal de paiement, une imprimante, un scanner, un lecteur NFC (« Near Field Communication » en anglais), un module Bluetooth permettant la connexion de dispositifs périphériques tel qu'un smartphone ou RFID (« *Radio Frequency IDentification »* en anglais), etc. Le module 140 peut être un distributeur de dispositif de localisation (chevalet) afin de pouvoir servir l'utilisateur à sa place une fois sa commande passée via le dispositif électronique interactif 100.

Le dispositif électronique interactif 100 peut comprendre un module de basculement 130, adapté pour provoquer un basculement entre plusieurs modes de fonctionnement du dispositif électronique interactif 100 comme expliqué ci-dessous.

Selon un mode de réalisation de l'invention, le module de basculement 130 comprend un élément graphique. L'élément graphique peut être un autocollant fixé sur le dispositif électronique interactif à proximité de l'écran 120. L'élément graphique est fixé de façon visible pour un utilisateur du dispositif électronique interactif 100. Selon un mode de réalisation de l'invention, l'élément graphique peut être intégré à l'interface graphique affichée sur l'écran 120.

Le module de détection 110 peut être placé au-dessus de l'écran 120, afin de détecter facilement la présence d'un élément d'interaction d'un utilisateur placé devant l'écran 120. L'élément d'interaction peut être la main ou un doigt de l'utilisateur, ou tout objet manipulé par l'utilisateur.

Le module de détection 110 peut aussi être placé sur les côtés ou le dessous du dispositif électronique interactif 100. Le module de détection 100 peut être placé à tout endroit permettant audit module de détection 100 de déterminer le positionnement d'un élément d'interaction utilisé par un utilisateur du dispositif électronique interactif 100.

Le module de détection 110 est adapté pour détecter la position d'un élément d'interaction placé dans le champ de vision dudit module de détection 110. Le module de détection 110 peut être une caméra 3D. Le terme « Caméra 3D » peut désigner un dispositif de capture d'images adapté pour capturer des images dites « en trois dimensions » (3D). Le terme « caméra 3D » peut aussi désigner un dispositif adapté pour capturer des images en deux dimensions intégrant une distance de chaque point de l'image au dispositif (« *range imaging* » en anglais). Il peut s'agir par exemple d'une caméra vidéo comprenant un module adapté pour déterminer une distance aux objets filmés, par exemple via un capteur ultrason, l'image issue de la caméra vidéo étant enrichie des informations de distances. Il peut aussi s'agir d'une caméra comprenant au moins deux objectifs, permettant une vision binoculaire afin de reconstruire une image 3D. Alternativement, ou de façon complémentaire, le module de détection 110 peut comprendre des capteurs ultrasonores ou laser adaptés pour détecter la position d'un objet placé dans son champ de vision. Le module de détection 110 peut par exemple comprendre un module de détection et estimation de la distance par la lumière ou laser, autrement désigné LIDAR (« *light detection and ranging* » en anglais). Le module de détection 110 peut par exemple comprendre un module de détection et estimation de la distance par onde sonore ou ultrasonore (« *sonar* » pour « *sound navigation and ranging* » en anglais).

Le module de détection 100 est adapté pour déterminer une position relative de l'élément d'interaction par rapport au dispositif électronique interactif 100, c'est-à-dire par exemple par rapport à la surface de l'écran 120.

Le module de détection 100 peut être adapté pour déterminer une vitesse ou une accélération de l'élément d'interaction. Le module de détection 100 peut aussi être adapté pour déterminer une composante selon, par exemple, une direction orthogonale, parallèle ou longitudinale à la surface de l'écran 120 de la vitesse ou de l'accélération de l'élément d'interaction.

Le dispositif électronique interactif 100 est généralement adapté pour être utilisée par un utilisateur en position debout et placé face au dispositif électronique interactif 110. Ainsi, le module d'affichage 120 est disposé de façon à afficher l'interface graphique de manière visible pour un tel utilisateur du dispositif électronique interactif 100 en position debout.

Un utilisateur du dispositif électronique interactif 100 peut ainsi interagir avec l'interface graphique affichée sur l'écran 120, et ce sans aucun contact, via le module de détection 110. Ainsi, l'utilisateur utilise sa main, un doigt ou tout autre élément d'interaction, pour naviguer dans l'interface graphique affichée par le module d'affichage 120. Pour cela l'utilisateur place sa main, ou son doigt, dans le champ de vision du module de détection 110.

Plus précisément, un volume de détection du module de détection 110 est prédéfini, le volume de détection prédéfini correspondant à une partie déterminée, limitée spatialement, du champ de vision du module de détection 110. Ce volume de détection prédéfini correspond à une zone spatialement limitée dans laquelle la détection d'un élément d'interaction - par exemple une main ou un doigt d'un utilisateur- est prise en compte. Dit autrement, un élément détecté par le module de détection 110 hors du volume de détection prédéfini est ignoré par le module de détection 110 et ne permet pas d'interagir avec le dispositif électronique interactif 100.

Un élément d'interaction peut être par exemple un stylet ou bien tout autre objet manipulé par un utilisateur du dispositif électronique interactif 100, ou toute partie du corps de l'utilisateur De façon plus générale, l'élément d'interaction peut désigner toute chose qui peut être détectée par le module de détection 110.

Le volume de détection peut être défini comme comprenant le volume devant l'écran 120 sur lequel est affichée l'interface graphique. Pour un écran 120 rectangulaire, le volume de détection peut comprendre un parallélépipède rectangle dont la base est l'écran 120. La définition d'un volume de détection permet de relier - ou mettre en correspondance - chaque point d'une surface de ce volume de détection avec chaque point de l'interface graphique. La surface mise en correspondance avec l'interface graphique est une surface faisant face à un utilisateur du dispositif électronique interactif, autrement dit la base du parallélépipède rectangle.

Ainsi, une surface projetée correspondant à la projection orthogonale du volume de détection prédéfini sur un plan comprenant l'écran 120 comprend la surface de l'écran 120.

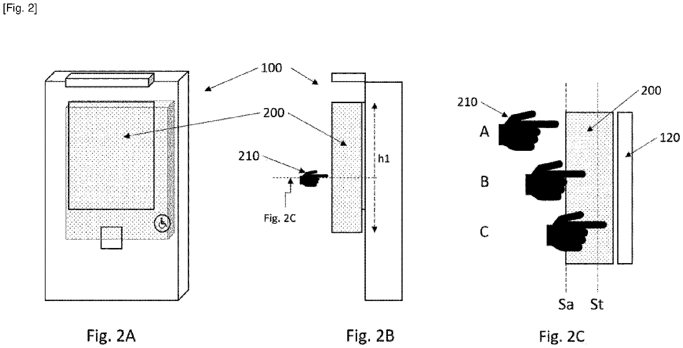

Selon un mode de réalisation de l'invention, le volume de détection prédéfini, comprenant le volume devant l'écran 120 sur lequel est affichée l'interface graphique, peut être étendu afin de recouvrir d'autres surfaces du dispositif électronique interactif 100, comme par exemple une zone comprenant le module de basculement 130 (comme illustré ci-dessous dans la figure 2A). Ainsi, le module de basculement 130 peut n'être constitué que d'un simple autocollant, matérialisant une position sur la surface du dispositif électronique interactif 100. L'interaction avec le module de basculement 130 est alors gérée par le module de détection 110.

La **figure 2****,** plus particulièrement les figures 2A, 2B et 2C, illustre le dispositif électronique interactif 100 de la figure 1, un volume de détection prédéfini 200 étant illustré en pointillé. Ce volume de détection prédéfini 200 est purement logique et n'est pas un élément tangible, il n'est ici représenté que pour illustration. Comme illustré dans la figure 2A, le volume de détection prédéfini 200 fait face dans cet exemple à l'écran 120 et au module de basculement 130. Ainsi, l'interface graphique et le module de basculement 130 peuvent être contrôlés par un utilisateur, au moyen d'un élément d'interaction, via le module de détection 110.

Selon le mode de réalisation de la figure 2A, l'écran 120 du dispositif électronique interactif 100 comprend une surface d'affichage rectangulaire. Le volume de détection prédéfini 200 est un parallélépipède rectangle, étendu afin de recouvrir le module de basculement 130. La profondeur ou épaisseur du volume de détection prédéfini 200, c'est-à-dire sa dimension selon l'axe orthogonal à l'écran 120, dépend du module de détection 110. Cette épaisseur est de dimension suffisante pour qu'un utilisateur puisse aisément interagir avec l'interface graphique au moyen d'un élément d'interaction, par exemple un doigt. Cette épaisseur est égale par exemple à une dizaine de centimètres.

Comme décrit précédemment et illustré dans la figure 2A, la surface projetée correspondant à la projection orthogonale du volume de détection prédéfini 200 sur un plan comprenant l'écran 120 comprend la surface de l'écran 120.

La figure 2B, qui est une vue de profil du dispositif électronique interactif 100 illustré dans les figures 1 et 2A, illustre un exemple de positionnement d'un élément d'interaction 210 adapté pour interagir avec le dispositif électronique interactif 100, l'élément d'interaction 210 pouvant être une main ou un doigt d'un utilisateur placé debout devant le dispositif électronique interactif 100.

La figure 2C est une vue de dessus de la coupe horizontale matérialisée par des pointillés sur la figure 2B. L'élément d'interaction 210 est illustré dans trois positions A, B et C différentes par rapport au volume de détection prédéfini 200.

L'élément d'interaction à la position A est hors du volume de détection prédéfini 200, il est donc ignoré par le module de traitement du dispositif électronique interactif 100, l'utilisateur ne peut pas interagir avec la borne interactive de commande 100.

L'élément d'interaction à la position B ou C est compris dans le volume de détection prédéfini 200, l'utilisateur peut interagir avec la borne interactive de commande 100. Dans l'hypothèse où l'épaisseur du volume de détection 200 est mesurée à partir de la surface de l'écran 200, le volume de détection 200 étant, selon ce mode de réalisation, affleurant à la surface de l'écran 200, alors les positions A, B et C différent en ce que :
- En position A, l'élément d'interaction est situé à plus d'une distance Sa de l'écran 120, c'est-à-dire hors du volume de détection 200, l'épaisseur de celui-ci étant précisément Sa ;
- En position B, l'élément d'interaction est situé à moins d'une distance Sa de l'écran 120, mais à plus d'une distance Sb de l'écran 120, la distance Sb permettant de définir un plan de séparation du volume de détection 200 en deux sous-volumes, l'élément d'interaction est dans le premier sous-volume de détection ;
- En position C, l'élément d'interaction est situé à moins d'une distance Sb de l'écran 120, l'élément d'interaction est dans le deuxième sous-volume de détection.

Selon un mode de réalisation, la détection d'un élément d'interaction à une position B ou C, permet de localiser un curseur sur l'interface graphique, l'activation d'un objet dans l'interface graphique pouvant se faire en pointant cet objet durant une durée prédéterminée.

Selon un autre mode de réalisation, le volume de détection prédéfini 200 comprend au moins un premier et un deuxième sous-volume de détection prédéfini séparés par un plan parallèle à la surface d'affichage de l'écran 120, chaque sous-volume de détection étant associé à un contrôle du curseur dans l'interface graphique. Le module de traitement est alors adapté pour contrôler le curseur de l'interface graphique en fonction de la position déterminée de l'élément d'interaction dans l'un ou l'autre des sous-volumes de détection prédéfinis, chaque sous-volume de détection étant associé à un contrôle du curseur dans l'interface graphique. Dans ce mode de réalisation, la position B correspond à un élément d'interaction dans un premier sous-volume de détection prédéfini et la position C à un élément d'interaction dans un deuxième sous-volume de détection prédéfini.

Selon cet autre mode de réalisation, le premier sous-volume de détection prédéfini est associé à un contrôle de positionnement du pointeur dans l'interface graphique et le deuxième sous-volume de détection prédéfini est associé à un contrôle d'action du pointeur dans l'interface graphique. Dit autrement, la détection de l'élément d'interaction 210 dans le premier sous-volume de détection peut permettre le déplacement du curseur dans l'interface graphique ou la sélection d'un objet dans l'interface graphique. La sélection d'un objet peut être associée à un effet visuel sur l'interface graphique (surbrillance de l'objet par exemple). La détection de l'élément d'interaction 210 dans le deuxième sous-volume de détection peut permettre d'activer un objet de l'interface graphique sur lequel est positionné le curseur, par exemple précédemment sélectionné.

Ainsi, le passage de l'élément d'interaction 210 du premier sous-volume de détection au deuxième sous-volume de détection permet de réaliser un « clique » dans l'interface graphique. La définition de deux sous-espaces de détection permet ainsi une intuitivité du geste d'activation (ou « clique ») d'un objet de l'interface graphique (sélection/validation d'un choix dans un menu par exemple) pour un utilisateur du dispositif électronique interactif 100, le geste reproduisant un geste d'appui vers l'écran du module d'affichage 120 (mais sans pour autant qu'il soit nécessaire de toucher l'écran).

Dans le cas où le volume de détection prédéfini 200 est accolé à l'écran du module d'affichage 120, le premier et deuxième sous-volume de détection du volume de détection prédéfini 200 peuvent être définis par les grandeurs « Sa » et « St » :
- « Sa » correspond à la distance maximale entre un élément d'interaction 210 face à l'écran et la surface d'affichage du module d'affichage 120 pour que cet élément d'interaction soit détecté, c'est-à-dire pour qu'il soit dans le volume de détection prédéfini 200,
- « St » correspond à la distance entre la séparation entre le premier sous-volume de détection et deuxième sous-volume de détection et la surface d'affichage du module d'affichage 120.

Selon un autre mode de réalisation, le volume de détection prédéfini 200 ne comprend pas de sous-volume de détection. Le module de détection 100 est adapté pour déterminer une vitesse ou une accélération de l'élément d'interaction. Le module de détection 100 peut aussi être adapté pour déterminer une composante selon, par exemple, une direction orthogonale, parallèle ou longitudinale à la surface de l'écran 120 de la vitesse ou de l'accélération de l'élément d'interaction.

Ainsi, le dispositif électronique interactif est adapté pour :
- enregistrer une première position déterminée et une deuxième position déterminée de l'élément d'interaction,
- déterminer, en fonction de la première et de la deuxième position déterminée de l'élément d'interaction, un paramètre associé au mouvement de l'élément d'interaction entre la première et la deuxième position, et, si ce paramètre dépasse un seuil prédéfini, alors déclencher une action du curseur dans l'interface graphique.

Dit autrement, le dispositif électronique interactif enregistre deux positions déterminée successives de l'élément d'interaction. Le dispositif électronique interactif détermine ensuite, en fonction de ces deux positions, ou possiblement selon seulement les composantes de ces deux positions déterminées suivant par exemple la direction orthogonale, parallèle ou longitudinale à la surface de l'écran 120, un paramètre associé au mouvement de l'élément d'interaction entre la première et la deuxième position. Ce paramètre peut correspondre à une vitesse ou une accélération entre ces deux positions.

Dans ce mode de réalisation, la position déterminée de l'élément d'interaction permet le contrôle du positionnement du pointeur dans l'interface graphique. Le contrôle d'action du pointeur dans l'interface graphique (i. e. « un clique ») est réalisé en fonction de la vitesse ou de l'accélération déterminée de l'élément d'interaction. Possiblement, le contrôle d'action du pointeur dans l'interface graphique est réalisé en fonction d'une composante, par exemple selon une direction orthogonale, parallèle ou longitudinale à la surface de l'écran 120, de la vitesse ou de l'accélération déterminée de l'élément d'interaction. Ainsi, un utilisateur peut réaliser un « clique » (ou « cliquer ») ou un scroll (ou « faire défiler ») dans l'interface graphique quand la vitesse ou l'accélération déterminée de l'élément d'interaction dépasse un seuil prédéfini, possiblement selon une direction orthogonale ou parallèle à la surface de l'écran 120.

Le dispositif électronique interactif peut enregistrer périodiquement une nouvelle position déterminée, et conserver en mémoire la précédente position déterminée. La détermination du paramètre associé au mouvement de l'élément d'interaction est réalisée après chaque enregistrement d'une nouvelle position, possiblement à condition qu'une précédente position déterminée soit bien enregistrée. Ainsi, si aucune position déterminée n'est déjà enregistrée, le dispositif électronique interactif ne détermine pas de paramètre associé au mouvement de l'élément d'interaction. En effet, cela donnerait lieu sinon à une détermination d'un paramètre aberrant.

Selon un mode de réalisation de l'invention, chaque position déterminée est associée à une position (x, y, z) dans un repère orthogonal comprenant un axe Y orthogonal à la surface de l'écran 120, la coordonnée « y » correspondant à une cordonnée selon cet axe Y. Dans ce cas, la détermination du paramètre associé au mouvement de l'élément d'interaction entre la première et la deuxième position peut consister en un calcul d'une différence entre chaque coordonnée « y » des deux positions déterminées selon l'axe Y, possiblement divisé par une valeur prédéterminée. Cette valeur prédéterminée peut être déterminée en fonction du délai écoulé entre la première et la deuxième position.

De manière complémentaire, le dispositif électronique interactif est adapté pour :
- enregistrer périodiquement une position déterminée de l'élément d'interaction dans une file de type « fifo » comprenant « n » enregistrements, « n » étant plus grand ou égal à deux, le n-ième enregistrement de la file correspondant au dernier enregistrement d'une position déterminée,
- déterminer, après chaque enregistrement, en fonction du premier et du n-ième enregistrement de la position déterminée de l'élément d'interaction, un paramètre associé au mouvement de l'élément d'interaction entre la première et la n-ième position déterminée, et, si ce paramètre dépasse un seuil prédéfini, alors déclencher une action du curseur dans l'interface graphique. Possiblement, ensuite, le dispositif électronique interactif efface les « n » enregistrements de la file.

Dit autrement, le dispositif électronique interactif est adapté pour enregistrer une succession de postions déterminées dans une file de type « fifo » (« first in, first out » en anglais ; c'est-à-dire que les premiers éléments arrivés dans la file sont les premiers à en sortir), l'enregistrement pouvant se faire périodiquement, un délai prédéterminé séparant chaque position. La détermination du paramètre associé au mouvement de l'élément d'interaction entre la première et la n-ième position déterminée est réalisé par un calcul effectué sur la première et dernière valeur de la file, et ce par exemple après chaque enregistrement d'une nouvelle position dans la file. Le calcul peut consister par exemple dans la détermination de la distance entre les deux positions. Si après ce calcul, le seuil n'est pas dépassé, une nouvelle position est enregistrée dans la file, et un nouveau calcul est effectué. Si après un calcul, le seuil est dépassé, alors le dispositif électronique interactif déclenche une action du curseur dans l'interface graphique, ou, dit autrement, réalise un « clique » à la position du curseur dans l'interface graphique. La file peut être ensuite remise à zéro, les différentes valeurs des positions enregistrées étant mise à zéro. L'effacement de la file après détection d'un « clique » permet d'éviter la détection d'une succession intempestive de « cliques ».

L'intérêt d'enregistrer plusieurs positions déterminées dans une file est de permettre un temps de réaction plus rapide, le dispositif électronique interactif réalisant n calculs pour un mouvement entre deux positions permettant de dépasser le seuil, le dispositif électronique interactif réagit donc dans un temps approximativement égal au délai prédéterminé séparant les n enregistrement.

Possiblement, la détermination du paramètre associé au mouvement de l'élément d'interaction entre la première et la n-ième position déterminée n'est réalisé que s'il y a bien n positions déterminées enregistrées dans la file « fifo ». Sans cette précaution, si la file « fifo » est préremplie de valeurs « par défaut » (par exemple valeur de « zéro » par défaut), la détermination du paramètre donnerait lieu à un paramètre aberrant.

Selon un mode de réalisation, la file « fifo » peut enregistrer quinze positions déterminées (n égal quinze). L'enregistrement d'une position déterminée peut être réalisé de manière synchronisée avec le rafraichissement de l'écran 120 ou de l'interface graphique. L'enregistrement d'une position déterminée peut être réalisé de manière périodique, à un intervalle de temps prédéterminé. Le seuil prédéfini peut être déterminé en fonction de la durée de l'intervalle de temps prédéterminé. Alternativement, lors de la détermination du paramètre associé au mouvement de l'élément d'interaction entre la première et la n-ième position déterminée, le calcul peut comprendre une étape de division par une valeur fonction de l'intervalle de temps prédéterminé, possiblement une racine carrée de la valeur fonction de l'intervalle de temps. La valeur fonction de l'intervalle de temps prédéterminé peut aussi dépendre de la longueur n de la file « fifo ».

De façon complémentaire, la valeur du seuil prédéfini permettant de définir un « clique » peut être variable selon la dernière position déterminée dans la zone de détection. Par exemple, la valeur du seuil prédéfini peut être définie de manière inversement proportionnelle à la distance entre la dernière position déterminée, possiblement sa composante selon un axe vertical, et le module de détection 110.

Dit autrement, contrairement au mode de réalisation précédent, dans lequel un utilisateur pouvait réaliser un « clique » en approchant l'élément d'interaction de la surface de l'écran 120 en deçà d'un seuil prédéterminé, dans ce mode de réalisation, c'est la vitesse ou l'accélération de l'élément d'interaction, possiblement selon une direction orthogonale à la surface de l'écran 120, lorsqu'un seuil prédéfini est dépassé, qui déclenche le « clique ».

De façon complémentaire aux différents modes de réalisation décrits, l'interface utilisateur peut comprendre un élément d'affichage, l'élément d'affichage indiquant par exemple :
- une distance déterminée entre l'élément d'interaction et la surface de l'écran 120 ;
- la vitesse déterminée de l'élément d'interaction, et/ou,
- l'accélération déterminée de l'élément d'interaction.

Possiblement, l'élément d'affichage comprend une indication supplémentaire permettant d'indiquer la valeur d'un seul prédéterminé, par exemple le seuil prédéterminé d'activation (« clique »). L'indication peut consister en une modification de forme ou de couleur d'un élément graphique.

L'affichage de la distance déterminée entre l'élément d'interaction et la surface de l'écran 120 peut se faire sous la forme d'un cercle ou disque de diamètre variable autour du curseur, le diamètre étant fonction de la distance déterminée. Le diamètre est par exemple proportionnel à la distance déterminée. Ainsi, plus un utilisateur rapproche l'élément d'interaction de la surface de l'écran 120, plus le cercle affiché autour du curseur se resserre autour du curseur.

Ce qui a été exposé précédemment permet de résoudre le problème d'hygiène posé par l'utilisation d'un écran tactile sur une borne interactive de commande ou dispositif électronique interactif. Ainsi, l'utilisation d'un module de détection tel une caméra 3D avec une borne interactive de commande 100, selon les modes de réalisations exposés ci-dessus, permet d'obtenir une borne interactive de commande ou dispositif électronique interactif sans contact. Il est à noter toutefois qu'il est possible de modifier une borne interactive de commande comprenant un écran tactile en y ajoutant un module de détection, par exemple une caméra 3D, la borne interactive de commande ainsi modifié pouvant alors fonctionner de manière tactile et/ou sans contact.

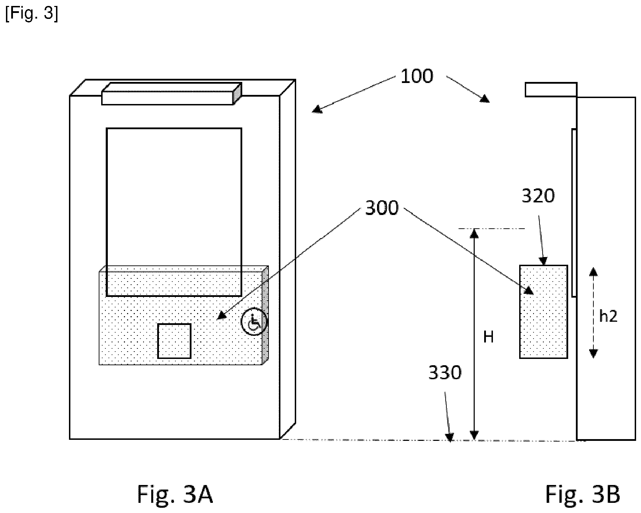

La **figure 3** illustre un autre aspect de l'invention. Selon cet aspect de l'invention, le dispositif électronique interactif 100 comprend au moins un premier mode de fonctionnement et un deuxième mode de fonctionnement.

Le premier mode de fonctionnement est associé à un premier volume de détection prédéfini 300 illustré dans la figure 3.

Le deuxième mode de fonctionnement est associé au volume de détection prédéfini 200, tel que précédemment décrit dans la figure 2.

Le dispositif électronique interactif est adapté pour pouvoir réaliser un basculement entre l'un ou l'autre des au moins deux modes de fonctionnement.

Ainsi, le dispositif électronique interactif 100 comprend :
- le module d'affichage adapté pour afficher l'interface graphique sur la surface de l'écran 120,
- le module de détection 110 adapté pour déterminer une position d'un élément d'interaction d'un utilisateur dans un premier volume de détection prédéfini 300, et,
- le module de traitement adapté pour contrôler le dispositif électronique interactif 100 en fonction de la position déterminée de l'élément d'interaction selon le premier mode de fonctionnement.

Dans le premier mode de fonctionnement, une première surface projetée correspondant à la projection orthogonale du premier volume de détection prédéfini 300 sur le plan comprenant l'écran 120 est en décalage par rapport à la surface de l'écran 120.

Dit autrement, le premier volume de détection prédéfini 300, ou du moins la première surface projetée correspondant à la projection orthogonale du premier volume de détection prédéfini 300 sur le plan comprenant l'écran 120, ne recouvre pas entièrement la surface de l'écran 120, voire ne la recouvre pas du tout.

Le décalage peut se faire vers le bas, le premier volume de détection prédéfini 300 se situant alors plus bas que l'écran 120.

La première surface projetée correspondant à la projection orthogonale du volume de détection prédéfini 300 sur le plan comprenant l'écran 120 peut être en décalage par rapport à l'écran 120. Selon le mode de réalisation illustré dans la figure 3, la première surface projetée est décalée vers le bas et à droite par rapport à l'écran 120.

Le basculement entre deux modes de fonctionnement peut être effectué sur détection d'un élément d'interaction en une zone prédéterminée du volume de détection actif pendant une durée prédéterminée. On entend par « volume de détection prédéfini actif », le premier ou deuxième volume de détection prédéfini selon le mode de fonctionnement du dispositif électronique interactif 100. Dit autrement, le volume de détection prédéfini actif est le volume de détection prédéfini 200 dans le deuxième mode de fonctionnement ou le volume de détection prédéfini 300 dans le premier mode de fonctionnement du dispositif électronique interactif 100.

Le basculement entre le premier et le deuxième mode de fonctionnement peut se faire en positionnant un élément d'interaction face au module de basculement 130. Le basculement peut alors être réalisée après expiration d'une durée prédéterminée tant que l'élément d'interaction reste détecté face au module de basculement 130. Une indication peut s'afficher à l'écran indiquant la durée restant avant le basculement effectif. Le basculement peut être automatique après activation du module de basculement 130, par exemple par activation du module de basculement 130 (position « C » de la figure 2C d'un élément d'interaction positionné devant le module de basculement 130).

Le dispositif électronique interactif 100 peut comprendre un module de basculement 130 adapté pour provoquer un basculement entre plusieurs modes de fonctionnement, comme expliqué ci-après. Ledit module de basculement 130 peut comprendre un autocollant matérialisant une position sur le dispositif électronique interactif 100. Selon un autre mode de réalisation de l'invention, le module de basculement 130 peut être un bouton de type interrupteur.

Plus généralement, le module de basculement 130 peut comprendre un élément graphique, cet élément graphique étant compris dans la première et deuxième surface projetée correspondant aux projections des volume de détection prédéfini 200 et 300 sur un plan comprenant l'écran 120.

Ainsi, le module de traitement peut être adapté pour provoquer un basculement entre le premier mode de fonctionnement et au moins le deuxième mode de fonctionnement lorsque la projection de la position déterminée de l'élément d'interaction sur le plan comprenant l'écran est comprise, pendant une durée prédéterminée, dans l'élément graphique du module de basculement 130.

Le deuxième volume de détection prédéfini 300 est par exemple adapté pour être accessible à un utilisateur en fauteuil roulant. Ainsi, selon certaines normes d'accessibilité d'équipements à des personnes en fauteuil roulant, les équipements doivent être disposés à une hauteur maximale H déterminée par rapport au sol, H pouvant être par exemple 1m40. Le deuxième volume de détection prédéfini 300 peut être ainsi entièrement disposé sous cette hauteur H tel qu'illustré dans les figures 3A et 3B. Dit autrement, le deuxième volume de détection prédéfini 300 est entièrement situé sous la hauteur H prédéterminée, H étant mesurée à partir du sol 330, afin de garantir l'accessibilité du dispositif électronique interactif 100 à des utilisateurs en fauteuil roulant.

Dit encore autrement, lorsque le dispositif électronique interactif 100 est installé pour une utilisation par des utilisateurs, lesdits utilisateurs étant situés devant le dispositif électronique interactif 100, la distance entre la face supérieure 320 du volume de détection prédéfini 300 et le sol 330 devant le dispositif électronique interactif est inférieure à une distance prédéterminée H.

Le deuxième volume de détection prédéfini 300 peut correspondre à une translation du volume de détection prédéfini 200 selon une direction parallèle à la surface de l'écran 120. Par exemple, le deuxième volume de détection prédéfini 300 peut correspondre à un abaissement du volume de détection prédéfini 200. Dans ce cas, la face supérieure 320 du deuxième volume de détection prédéfini 300 est plus proche du sol que la face supérieure du premier volume de détection prédéfini 200.

Le deuxième volume de détection prédéfini 300 peut correspondre à une translation, homothétie, rotation, et/ou toute autre combinaison de transformations du volume de détection prédéfini 200.

Dit autrement, la première surface projetée correspondant à la projection orthogonale du volume de détection prédéfini 300 sur le plan comprenant l'écran 120 peut correspondre à une translation, homothétie, rotation, et/ou toute autre combinaison de transformations de la deuxième surface projetée correspondant à la projection orthogonale du volume de détection prédéfini 200 sur le plan comprenant l'écran 120.

Selon un mode de réalisation de l'invention, au moins une dimension, longueur ou largeur, de la première surface projetée est inférieure à la même dimension de la deuxième surface projetée. Ainsi, par exemple, la longueur ou hauteur h2 de la première surface projetée, comme illustré dans la figure 3B, est inférieure à la longueur ou hauteur h1 de la deuxième surface projetée, comme illustré dans la figure 2B. Dit autrement, au moins une dimension du volume de détection prédéfini 300 peut être réduite comparativement à la même dimension du volume de détection prédéfini 200.

Plus généralement, la surface projetée correspondant à la projection orthogonale du volume de détection prédéfini 200 ou 300 sur le plan comprenant l'écran 120 peut correspondre à une translation, homothétie, rotation, et/ou toute autre combinaison de transformations de l'écran 120.

Le deuxième volume de détection prédéfini 300 peut ainsi être de dimensions différentes de celles du premier volume de détection prédéfini 200. Ceci peut être le cas si ce deuxième volume de détection prédéfini 300 doit répondre à la contrainte d'être entièrement sous la hauteur H et que la hauteur de l'écran est proche, voire supérieure à la hauteur H. La hauteur du premier volume de détection prédéfini 300 peut alors être réduite par rapport à celle du deuxième volume de détection prédéfini 200. Une position détectée d'un élément d'interaction dans le deuxième volume de détection prédéfini 300 peut permettre de déterminer proportionnellement à la réduction de hauteur réalisée une position d'un pointeur ou curseur dans l'interface graphique.

Le module de traitement est adapté pour réaliser une correspondance entre une position déterminée d'un élément d'interaction et un point de l'interface graphique. Indépendamment de la taille de chaque volume de détection prédéfini, à tout point de l'interface graphique correspond une position possible de l'élément d'interaction au sein de chaque volume de détection prédéterminé.

Ainsi, la première surface projetée correspondant à la projection orthogonale du volume de détection prédéfini 300 sur le plan comprenant l'écran 120 peut avoir une hauteur réduite par rapport à la hauteur de l'écran 120.

Le deuxième volume de détection prédéfini 300 peut être étendu afin de recouvrir le module de basculement 130. Ainsi, le module de basculement 130 peut être utilisé via le module de détection 110 dans le deuxième mode de fonctionnement. Dans ce cas, dans le premier mode de fonctionnement, seule une partie du premier volume de détection prédéfini 300 permet de naviguer dans l'interface graphique de la borne interactive de commande 100, de manière similaire au deuxième mode de fonctionnement illustré dans les figures 1 et 2.

Selon un mode de réalisation de l'invention complémentaire, le premier volume de détection prédéfini 300 est éloigné par rapport à l'écran 120 selon un axe orthogonal à l'écran 120 afin de rapprocher ledit volume de détection d'un utilisateur du dispositif électronique interactif 100 situé devant ledit dispositif électronique interactif 100. En effet, un utilisateur en fauteuil roulant ne peut pas forcément s'approcher du dispositif électronique interactif 100 autant que le pourrait un utilisateur sans fauteuil roulant. Le premier volume de détection prédéfini 300 peut alors être rapproché de la position de l'utilisateur en fauteuil, roulant afin de faciliter l'utilisation du dispositif électronique interactif 100.

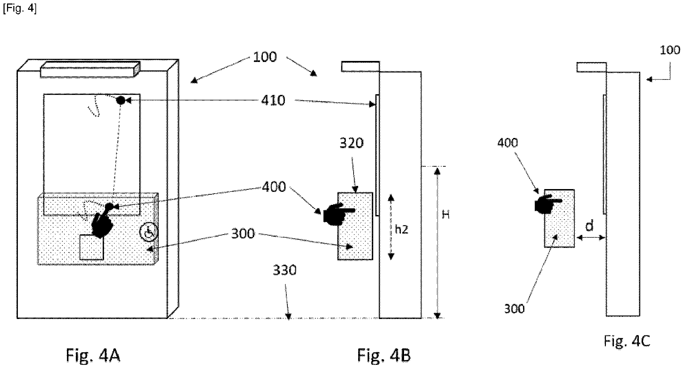

La **figure 4** illustre l'utilisation d'un dispositif électronique interactif 100 dans le deuxième mode de fonctionnement. Un élément d'interaction 400 (identique à l'élément d'interaction 210) correspond à la main ou un doigt d'un utilisateur de la borne interactive de commande 100, l'utilisateur étant dans un fauteuil roulant. La hauteur relativement plus basse du premier volume de détection prédéfini 300 du premier mode de fonctionnement comparativement à la hauteur du deuxième volume de détection prédéfini 200 du deuxième mode de fonctionnement facilite son utilisation pour cet utilisateur. Ainsi, la position de l'élément d'interaction 400 représentée dans la figure 4A ou 4B permet à l'utilisateur, dans le premier mode de fonctionnement, d'atteindre un point 410 situé en hauteur de l'interface graphique. Comparativement, cette même position de l'élément d'interaction 400 correspondrait, dans le deuxième mode de fonctionnement, seulement à un point bas du deuxième volume de détection prédéfini 200 et ne permettrait donc pas d'accéder au haut de l'interface graphique. Le fait d'avoir décaler le premier volume de détection prédéfini 300 plus bas relativement au deuxième volume de détection prédéfini 200 permet donc à un utilisateur positionné plus bas, car par exemple assis dans un fauteuil roulant, d'atteindre toutes les positions du volume de détection prédéfini 300, et par conséquent de pouvoir naviguer dans la totalité de l'interface graphique.

Selon un mode de réalisation de l'invention, dans le premier et/ou deuxième mode de fonctionnement du dispositif électronique interactif 100, l'interface graphique comprend un curseur permettant d'interagir avec au moins un objet de l'interface graphique, le module de traitement est adapté pour contrôler le curseur de l'interface graphique en fonction de la position déterminée de l'élément d'interaction 400.

Plus précisément, selon un mode de réalisation de l'invention, Le module de traitement du dispositif électronique interactif 100 est adaptée pour contrôler le curseur de l'interface graphique en fonction de la position déterminée par le module de détection 100 de l'élément d'interaction 400 :
- dans le premier volume de détection prédéfini 300 quand le dispositif électronique interactif 100 est dans le premier mode de fonctionnement,
- dans le deuxième volume de détection prédéfini 200 quand le dispositif électronique interactif 100 est dans le deuxième mode de fonctionnement.

Ainsi, le module de traitement est adapté pour associer à une position détectée d'un élément d'interaction 400 dans l'un ou l'autre des volumes de détection 200 ou 300, selon le mode de fonctionnement du dispositif électronique interactif 100, une position du curseur dans l'interface graphique.

Le module de traitement comprend, pour chaque volume de détection, une table de correspondance ou un algorithme de correspondance permettant de déterminer une position du curseur dans l'interface graphique à partir d'une position détectée - donnée par le module de détection 110 - d'un élément d'interaction 400 au sein d'un volume de détection prédéfini.

La position détectée peut être exprimée comme une position relativement à un point de référence prédéterminé de chaque volume de détection prédéfini.

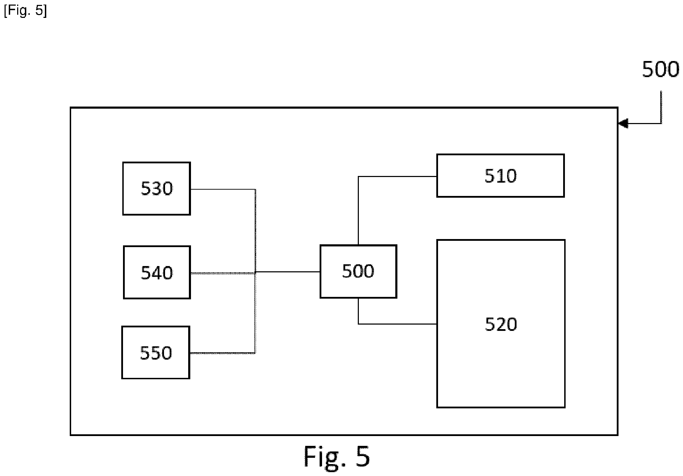

La **figure 5** illustre schématiquement l'architecture matérielle d'un dispositif électronique interactif 100 selon un mode de réalisation de l'invention.

Le dispositif électronique interactif 100 comprend un module de traitement 500, pouvant comprendre une unité centrale. Le module de traitement 500 peut être une unité centrale d'ordinateur, comprenant un microprocesseur, de la mémoire vive, une unité de stockage et des interfaces d'entrée/sortie. Le module de traitement 500 est le module de traitement du dispositif électronique interactif 100 décrit précédemment dans la description des figures précédentes.

Le module de traitement 500 est connectée à un module d'affichage 520. Le module d'affichage 520 est adapté pour afficher une interface graphique sur un écran, cet écran étant l'écran 120 précédemment décrit. Le module d'affichage 520 peut comprendre un écran, tactile ou non. Le module d'affichage 500 peut être un projecteur adapté pour projeter une image sur un écran distant, l'image projetée définissant une surface d'affichage de l'interface graphique affichée.

Le module de traitement 500 est connectée à un module de détection 510. Le module de détection 510 peut être une caméra 3D ou tout autre dispositif de pointage pouvant détecter la position d'un élément d'interaction. Le module de détection 510 peut être disposé en tout endroit permettant d'avoir dans son champ de vision une zone frontale du dispositif électronique interactif 100, particulièrement la zone devant la surface d'affichage du module d'affichage 520. Le module de détection 510 peut être avantageusement placé au-dessus de la borne interactive de commande 100 en surplomb du module d'affichage 520. Le module de détection 510 est le module de détection 110 précédemment décrit.

Selon un mode de réalisation, le dispositif électronique interactif 100 comprend au moins deux modes de fonctionnement, le module de détection 510 étant adapté pour s'orienter ou se déplacer afin de modifier l'orientation de son champ de vision. Ainsi, le module de détection 510 peut adapter son orientation ou sa position afin de définir un deuxième volume de détection prédéfini potentiellement éloigné d'un premier volume de détection prédéfini.

Le module 530, 540 ou 550 peut être un terminal de paiement, une imprimante, un scanner, un lecteur NFC (« Near Field Communication » en anglais) ou RFID (« Radio Frequency IDentification » en anglais), etc. Le module 530, 540 ou 550 peut être un distributeur de dispositif de localisation (chevalet) afin de pouvoir servir l'utilisateur à sa place une fois sa commande passée via le dispositif électronique interactif 100. L'un de ces modules 530, 540 et 550 peut être le module de basculement 130 précédemment décrite si celle-ci est de type interrupteur ou bouton de commande.

Selon un mode de réalisation alternatif de l'invention, le dispositif électronique interactif 100 ne comprend qu'un seul mode de fonctionnement, le module de détection 110 étant associé à un seul volume de détection prédéfini 300 tel qu'illustré dans la figure 3.

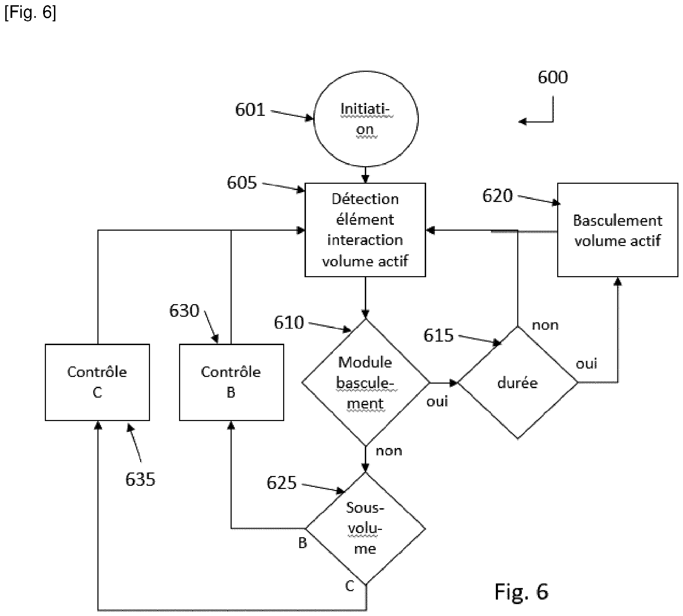

La **figure 6** illustre les étapes d'un procédé mis en œuvre par un dispositif électronique interactif selon un mode de réalisation de l'invention. Les étapes du procédé sont réalisées par le module de traitement 500, en s'appuyant pour certaines étapes sur le module de détection 110, 510 et possiblement sur le module de basculement 130.

L'étape 601 est une étape d'initialisation du dispositif électronique interactif 100, suite par exemple à une mise sous tension du dispositif électronique interactif 100. Le dispositif électronique interactif 100 démarre dans un mode de fonctionnement par défaut prédéfini, le mode de fonctionnement par défaut correspondant au premier ou au deuxième mode de fonctionnement précédemment décrit.

La suite du procédé est décrite avec l'hypothèse que le mode de fonctionnement par défaut est le deuxième mode de fonctionnement. Le volume de détection prédéfini actif est donc le deuxième volume de détection prédéfini 200.

L'étape 605 correspond à la détection par le module de détection 110 d'un élément d'interaction dans le volume de détection actif. Le module de détection 110 détermine alors une position de l'élément d'interaction dans le volume de détection prédéfini actif.

Dans une étape 610, le dispositif électronique interactif 100 détermine si la position de l'élément d'interaction correspond à un élément graphique du module de basculement 130. Selon un mode de réalisation de l'invention, le module de traitement 500 détermine si la projection de la position déterminée de l'élément d'interaction sur le plan comprenant l'écran est comprise dans l'élément graphique du module de basculement 130.

Si oui, dans une étape 615, le module de traitement 500 détermine si la projection de la position déterminée de l'élément d'interaction sur le plan comprenant l'écran est comprise dans l'élément graphique du module de basculement 130 au moins pendant une durée prédéfinie. Dit autrement, le module de traitement 500 vérifie que la position de l'élément d'interaction est maintenue au moins pendant un temps prédéterminé. Ce n'est pas le cas si l'utilisateur bouge significativement l'élément d'interaction. Possiblement, un message s'affiche pendant ce temps dans l'interface graphique afin de prévenir l'utilisateur du basculement à venir du mode de fonctionnement, un décompte du temps restant avant le basculement pouvant aussi être affiché.

Si l'élément d'interaction n'est pas maintenu en sa position face à l'élément graphique, alors le dispositif électronique interactif 100 retourne à l'étape 605 en attente de détection d'une nouvelle position de l'élément d'interaction.

Si l'élément d'interaction est maintenu en sa position pendant une durée supérieure à une durée prédéterminée, alors le module de traitement 500 passe à l'étape 620.

Alternativement à une étape 615 reposant sur l'attente d'une durée prédéterminée pour valider le basculement, et selon un autre mode de réalisation de l'invention, l'étape 615 peut consister en une vérification du passage de la position de l'élément d'interaction du premier sous-volume de détection au deuxième sous-volume de détection.

Dans l'étape 620, le module de traitement 500 réalise le basculement du mode de fonctionnement du dispositif électronique interactif 100. Si le mode de fonctionnement actif était le premier mode de fonctionnement, alors le module de traitement 500 bascule le dispositif électronique interactif dans le deuxième mode de fonctionnement et vice-versa. Une fois le basculement réalisé, le dispositif électronique interactif 100 repasse à l'étape 605, le volume de détection prédéfini actif étant maintenant le deuxième volume de détection prédéfini si le premier volume de détection était précédemment actif, et vice-versa.

Si, lors de l'étape 610, le module de traitement 500 détermine que l'élément d'interaction n'est pas face à l'élément graphique, alors le module de traitement 500 passe à l'étape 625.

Dans l'étape 625, le module de traitement 500 détermine dans quel sous-volume de détection l'élément d'interaction est situé.

Si l'élément d'interaction est dans la position B de la figure 2C, c'est-à-dire dans le premier sous-volume de détection du volume de détection prédéfini actif, alors le module de traitement 500 passe à l'étape 630.

Si l'élément d'interaction est dans la position C de la figure 2C, c'est-à-dire dans le deuxième sous-volume de détection du volume de détection prédéfini actif, alors le module de traitement 500 passe à l'étape 635.

Dans l'étape 630, le module de traitement contrôle le curseur de l'interface graphique en fonction de la position déterminée de l'élément d'interaction, le contrôle du curseur étant associé au premier sous-volume de détection. Par exemple, cela peut correspondre à un contrôle de positionnement - ou positionnement - du curseur dans l'interface graphique ou à une sélection d'un objet.

Dans l'étape 635, le module de traitement contrôle le curseur de l'interface graphique en fonction de la position déterminée de l'élément d'interaction, le contrôle du curseur étant associé au deuxième sous-volume de détection. Par exemple, cela peut correspondre à un contrôle d'action - ou activation - du curseur dans l'interface graphique ou à une activation d'un objet. Par activation, on entend la réalisation d'une action associée à l'objet (ouvrir un dossier sélectionné, validation d'un choix, etc.). L'action peut correspondre à un « clique » généralement réalisé au moyen d'un bouton d'une souris.

Suite aux étapes 360 et 635, le module de traitement retourne à l'étape 605, en attente d'une nouvelle détermination par le module de détection 110 d'un élément d'interaction dans l'espace de détection actif.

Selon le mode de réalisation de l'invention, les étapes 310 et 325 peuvent être inversées, voire réalisées simultanément.

Concrètement, l'invention peut être mise en œuvre dans une borne interactive de commande de restaurant. Un utilisateur dans un fauteuil roulant peut ainsi basculer le mode de fonctionnement de la borne afin d'abaisser le volume de détection et le rendre ainsi accessible à un utilisateur assis.

## Revendications

1. Dispositif électronique interactif **caractérisé en ce qu'**il comprend :
- un module d'affichage adapté pour afficher une interface graphique sur une surface d'un écran,
- un module de détection adapté pour déterminer une position d'un élément d'interaction d'un utilisateur dans un premier volume de détection prédéfini, et,
- un module de traitement adapté pour contrôler le dispositif électronique interactif en fonction de la position déterminée de l'élément d'interaction selon un premier mode de fonctionnement,
et **en ce que**, dans le premier mode de fonctionnement, une première surface projetée correspondant à une projection orthogonale du premier volume de détection prédéfini sur un plan comprenant l'écran est en décalage par rapport à la surface de l'écran.

2. Dispositif électronique interactif selon la revendication précédente, **caractérisé en ce que** le premier volume de détection prédéfini est éloigné par rapport à l'écran selon un axe orthogonal depuis ledit écran.

3. Dispositif électronique interactif selon l'une des revendications précédentes, **caractérisé en ce que** :
- le module de détection est adapté pour déterminer une position de l'élément d'interaction de l'utilisateur dans un deuxième volume de détection prédéfini,
- le module de traitement est adapté pour contrôler le dispositif électronique interactif en fonction de la position déterminée de l'élément d'interaction selon un deuxième mode de fonctionnement,
et **en ce que**, dans le deuxième mode de fonctionnement, la surface projetée correspondant à la projection orthogonale du deuxième volume de détection prédéfini sur un plan comprenant l'écran comprend la surface de l'écran.

4. Dispositif électronique interactif selon l'une des revendications précédentes, **caractérisé en ce que** au moins une dimension, longueur ou largeur, de la première surface projetée est inférieure à la même dimension de la deuxième surface projetée.

5. Dispositif électronique interactif selon la revendication précédente, **caractérisé en ce que** la première surface projetée correspond à une homothétie de la deuxième surface projetée.

6. Dispositif électronique interactif selon l'une des revendications précédentes, **caractérisé en ce que,** l'interface graphique comprend un curseur permettant d'interagir avec au moins un objet de l'interface graphique, le module de traitement étant adapté pour contrôler le curseur de l'interface graphique en fonction de la position de l'élément d'interaction déterminée par le module de détection.

7. Dispositif électronique interactif selon la revendication 6, **caractérisé en ce que,** dans le premier mode de fonctionnement, le dispositif électronique interactif est adapté pour :
- enregistrer une première et une deuxième position déterminée de l'élément d'interaction,
- calculer, en fonction de la première et de la deuxième position déterminée de l'élément d'interaction, un paramètre associé au mouvement de l'élément d'interaction entre la première et la deuxième position, et,
- si ce paramètre dépasse un seuil prédéfini, alors déclencher une action du curseur dans l'interface graphique.

8. Dispositif électronique interactif selon la revendication 6, **caractérisé en ce que** le dispositif électronique interactif est adapté pour :
- enregistrer périodiquement une position déterminée de l'élément d'interaction dans une file de type « fifo » comprenant « n » enregistrements, « n » étant plus grand ou égal à deux, le n-ième enregistrement de la file correspondant au dernier enregistrement dans la file d'une position déterminée,
- calculer, après chaque enregistrement, en fonction du premier et du n-ième enregistrement de la position déterminée de l'élément d'interaction, un paramètre associé au mouvement de l'élément d'interaction entre la première et la n-ième position déterminée, et,
- si ce paramètre dépasse un seuil prédéfini, alors déclencher une action du curseur dans l'interface graphique.

9. Dispositif électronique interactif selon l'une des revendications 3 à 8, **caractérisé en ce qu'il** comprend un module de basculement adapté pour provoquer un basculement entre le premier mode de fonctionnement et au moins le deuxième mode de fonctionnement.

10. Dispositif électronique interactif selon la revendication précédente, **caractérisé en ce que** :
- le module de basculement comprend un élément graphique,
- la première et la deuxième surface projetée comprennent l'élément graphique,
et **en ce que** le module de traitement est adapté pour provoquer un basculement entre le premier mode de fonctionnement et au moins le deuxième mode de fonctionnement lorsque la projection de la position déterminée de l'élément d'interaction sur le plan comprenant l'écran est comprise, pendant une durée prédéterminée, dans l'élément graphique.

11. Dispositif électronique interactif selon l'une des revendications précédentes, **caractérisé en ce que,** lorsque le dispositif électronique interactif est installé pour une utilisation par des utilisateurs, lesdits utilisateurs étant situés devant le dispositif électronique interactif, la distance entre la face supérieure du volume de détection prédéfini et le sol devant le dispositif électronique interactif est inférieure à une distance prédéterminée.

12. Borne de commande interactive pour une utilisation dans un restaurant **caractérisée en ce que** la borne de commande interactive est un dispositif électronique interactif selon l'une des revendications précédentes.

13. Procédé de contrôle d'un dispositif électronique interactif, **caractérisé en ce que,** le dispositif électronique interactif comprenant un module d'affichage adapté pour afficher une interface graphique sur une surface d'un écran, le procédé comprend les étapes de :
- déterminer, par un module de détection du dispositif électronique interactif, une position d'un élément d'interaction d'un utilisateur dans un premier volume de détection prédéfini,
- contrôler, par un module de traitement du dispositif électronique interactif, ledit dispositif électronique interactif en fonction de la position déterminée de l'élément d'interaction selon un premier mode de fonctionnement,
dans ce premier mode de fonctionnement, une première surface projetée correspondant à une projection orthogonale du premier volume de détection prédéfini sur un plan comprenant l'écran est en décalage par rapport à la surface de l'écran.
